# FASCICULE DE BREVET EUROPEEN

(11) **EP 1 598 567 B1**
(45) Date de publication et mention de la délivrance du brevet: **21.03.2007**
(21) Numéro de dépôt: 05354020.9
(22) Date de dépôt: 16.05.2005
(51) Int. Cl.: F16B 37/06

(54) **Procédé d'assemblage d'un goujon à sertir et goujon à sertir obtenu par un tel procédé**
Verfahren zum Zusammenbau einer Pressniete und Pressniete hergestellt durch ein solches Verfahren
Method for assembling a press rivet and press rivet obtained by such a method

(30) Priorité: 19.05.2004 FR 0405476
(43) Date de publication de la demande: 23.11.2005
(73) Titulaire: Bollhoff Otalu S.A., 73490 La Ravoire (FR)
(72) Inventeur: Gory, Philippe, 73160 Saint Thibaud de Couz (FR); Dardel, Candide, 73190 Challes les Faux (FR)
(74) Mandataire: Jouvray, Marie-Andrée

(56) Documents cités:
- EP-A- 0 945 631
- FR-A- 2 699 617
- US-A- 4 007 659

## Description

### Domaine technique de l'invention

L'invention concerne un procédé d'assemblage des composants d'un goujon à sertir dans un support, le goujon à sertir comportant une tige cylindrique filetée, terminée par une tête, et une douille, liée à la tige filetée par déformation et comportant successivement une zone d'assemblage de la douille sur la tige filetée, en contact avec la tête, une zone de chambrage, destinée à la formation d'un bourrelet de sertissage du goujon, et une collerette d'appui, la tige filetée comportant, en regard de la zone d'assemblage, une partie moletée constituée par une pluralité de rainures longitudinales.

L'invention concerne également un goujon à sertir obtenu par un tel procédé d'assemblage.

### État de la technique

Un goujon à sertir est un goujon destiné à être solidarisé par sertissage dans un support de faible épaisseur. Le support peut être de toute nature, notamment métallique ou en matière plastique. La matière du goujon à sertir peut être choisie parmi l'acier, l'acier inoxydable, l'aluminium et le laiton.

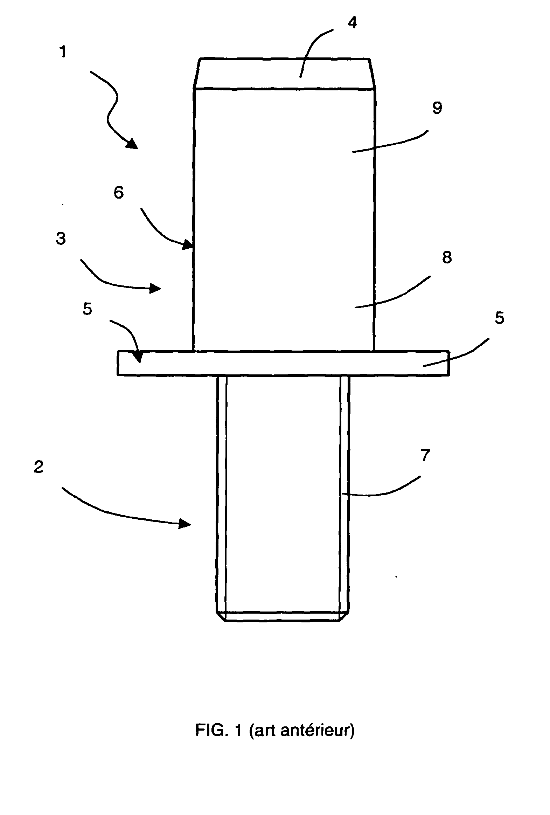

Comme représenté sur la figure 1, le goujon à sertir 1 est classiquement constitué de deux composants, une tige filetée 2 et une douille 3. La tige filetée 2 peut comporter une tête 4 et la douille 3, en contact avec la tête 4, est constituée d'une collerette 5 et d'un fût 6. La collerette 5 de la douille 3 peut être de toute nature, par exemple plate, fraisée, elliptique ou polygonale, et le fût 6 peut être de tout type, par exemple cylindrique, lisse, moleté, hexagonal ou semi-hexagonal. La douille 3 est liée à la tige filetée 2, par exemple, par sertissage. Le goujon à sertir 1 se divise alors en quatre zones distinctes, à savoir une zone filetée 7 formée sur la partie de la tige 2 faisant saillie hors de la douille 3, la collerette 5, une zone de chambrage 8 et une zone d'assemblage 9.

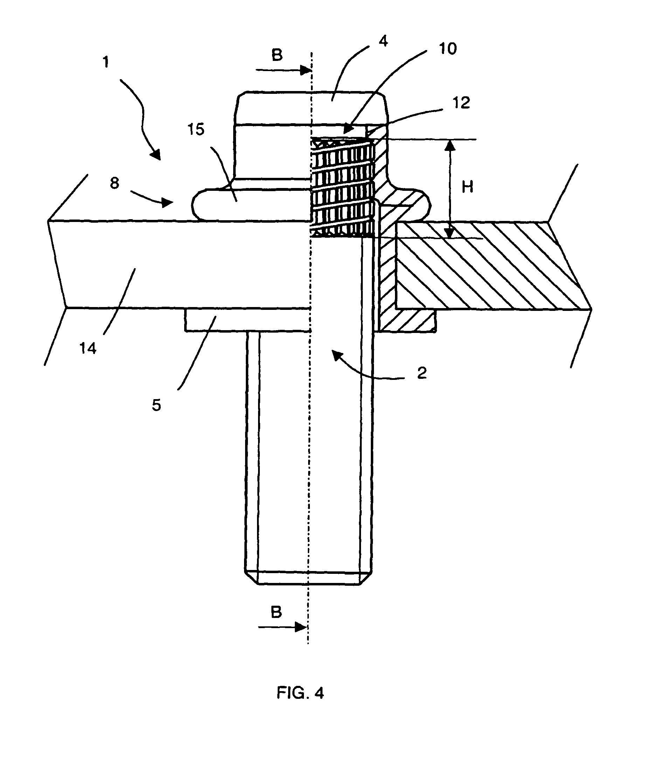

La zone filetée 7 représente la partie fonctionnelle du goujon 1 après sertissage sur un support 14 (figure 4) et doit être suffisamment résistante pour pouvoir subir sans déformation les charges appliquées à un écrou normalisé vissé sur la tige 2.

La collerette 5 est destinée à venir en contact avec le support 14 (figure 4) sur lequel le goujon 1 sera installé et à servir d'appui à une autre pièce, qui sera ultérieurement assemblée sur le support par l'intermédiaire, par exemple, d'un écrou.

La zone de chambrage 8, ou zone de sertissage, est destinée à se déformer sous l'action d'une force axiale appliquée sur la douille 3 par l'intermédiaire de la tige filetée 7. Elle doit être suffisamment plastique et ductile pour se déformer de manière symétrique, sans rupture, sous une charge ajustée en fonction du diamètre du filetage de la tige 2 et de la nature du matériau constituant le goujon à sertir 1. Comme représenté à la figure 4, la zone de chambrage 8 se transforme, après déformation, en un bourrelet de sertissage 15, qui vient pincer le support 14 contre la collerette 5, assurant ainsi le maintien du goujon 1 sur le support 14.

La zone d'assemblage 9 représente la zone de liaison entre la douille 3 et la tige filetée 2 du goujon à sertir 1. Elle doit permettre de garantir la tenue mécanique du goujon à sertir 1 en utilisation. L'assemblage de la douille 3 sur la tige filetée 2 doit donc être le plus résistant possible.

Une première technique d'assemblage connue consiste à souder la douille 3 sur la tige 2, au niveau de la zone d'assemblage 9, avant d'effectuer un traitement de surface, notamment un traitement anti-corrosion, sur le goujon à sertir 1. Dans ce cas, le goujon 1 ne présente pas de bonnes caractéristiques de tenue à la corrosion, car la tige 2 et la douille 3 ont été assemblées avant d'être traitées. Par ailleurs, le procédé de soudure atténue les performances mécaniques du goujon 1.

Le sertissage est une autre technique d'assemblage connue. La tige filetée 2 comporte alors une gorge et le matériau de la douille 3 vient s'insérer dans cette gorge pour bloquer la douille 3 en translation et en rotation.

À titre d'exemple, le document FR-A-2699617 décrit un goujon à sertir constitué d'une douille vissée sur un élément fileté. Les deux composants du goujon sont sertis par des molettes tournantes. L'élément fileté comporte une gorge et le sertissage provoque l'apparition d'une couronne de sertissage, destinée à bloquer en rotation la douille sur l'élément fileté. Dans ce cas, la tenue mécanique de la douille sur l'élément fileté n'est pas optimale.

Le document US-A-4 007 659 décrit une autre technique d'assemblage des composants du goujon à sertir. La solidarisation de la douille sur la tige filetée est réalisée par la forme complémentaire de l'extrémité inférieure de la douille et de la partie correspondante de la tige. Lors du sertissage du goujon dans le support, une partie moletée présente sur la tige se remplit de matière pour assurer la tenue de la douille par rapport à la tige. Cependant, la tenue mécanique d'un goujon assemblé selon ce procédé n'est pas optimale, la qualité d'assemblage des composants du goujon dépendant de l'opération de sertissage sur le support.

### Objet de l'invention

L'invention a pour but de remédier aux inconvénients précités et a pour objet un procédé d'assemblage des composants d'un goujon à sertir permettant d'obtenir un goujon à sertir avec une tenue mécanique optimale en rotation et en extraction, tout en étant indépendant de l'opération de sertissage du goujon sur le support.

Selon l'invention, ce but est atteint un procédé d'assemblage et un goujon à sertir selon les revendications annexées. Le but est atteint, plus particulièrement, par le fait que les rainures longitudinales sont réalisées sur le filetage de la tige, de manière à former une pluralité de rainures hélicoïdales, et par le fait que l'assemblage de la douille sur la tige filetée est effectué par une méthode de rétreint, avant sertissage dans ledit support.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
La figure 1 représente un goujon à sertir selon l'art antérieur.
La figure 2 représente une vue en coupe partielle selon l'axe A-A d'un mode particulier de réalisation d'un goujon à sertir selon l'invention.
La figure 3 représente une vue de face de la tige filetée du goujon à sertir selon la figure 2.
La figure 4 représente une vue en coupe partielle selon l'axe B-B du goujon selon la figure 2 serti sur un support.

### Description du mode particulier de réalisation

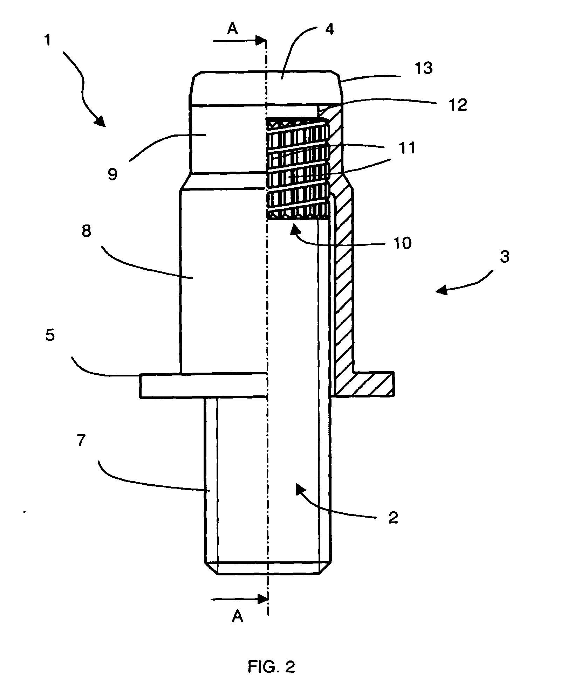

Sur la figure 2, le goujon à sertir 1 est classiquement constitué d'une tige filetée 2, terminée par la tête 4, et de la douille 3, comportant la collerette d'appui 5, la zone de chambrage 8, destinée à se transformer en bourrelet de sertissage, et la zone d'assemblage 9, en contact avec la tête 4 de la tige filetée 2. Le goujon 1 comporte ainsi successivement quatre zones distinctes, à savoir la zone filetée 7, qui est sa partie fonctionnelle en utilisation, la collerette 5, la zone de chambrage 8 et la zone d'assemblage 9. La douille 3 est liée à la tige filetée 2 par déformation au niveau de la zone d'assemblage 9.

La tête 4 de la tige filetée 2 comporte, de préférence, un chanfrein 13 de forme sensiblement tronconique, appelé aussi cône d'entrée. Le chanfrein 13 facilite l'introduction du goujon 1 dans un support. Le diamètre de la tête 4 de la tige filetée 2 est sensiblement identique à celui de la zone d'assemblage 9 de la douille 3, après déformation de la douille 3 sur la tige filetée 2. Ainsi, en cas de sollicitation en traction de la douille 3, la tête 4 empêche la douille 3 de se désolidariser de la tige filetée 2. La tête 4 garantit donc un effet d'anti-extraction.

La tige filetée 2 et la douille 3 sont réalisées en un matériau choisi parmi l'acier, l'acier inoxydable, l'aluminium ou le laiton. La douille 3 peut être, par exemple, à tête plate, fraisée, elliptique ou polygonale et à fût cylindrique, moleté, hexagonal ou semi-hexagonal. La douille 3 a, de préférence, un fût moleté ou hexagonal, de manière à ce que la zone de chambrage 8 empêche la rotation de la douille 3 dans le support 14 (figure 4), après sertissage du goujon 1.

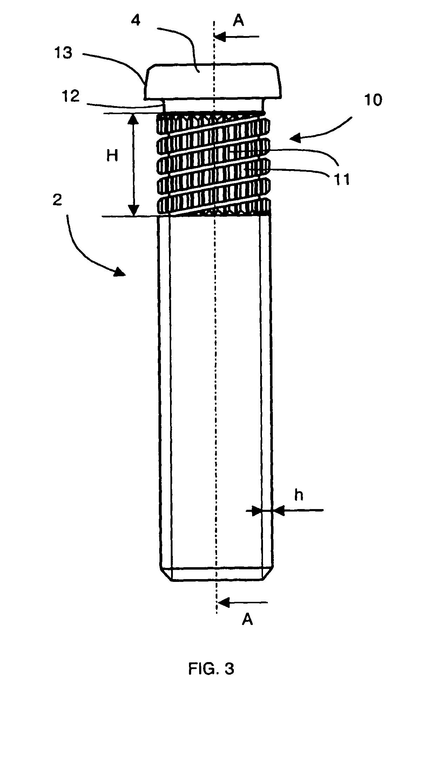

Comme représenté aux figures 2 et 3, la tige 2, filetée sur la totalité de sa longueur, comporte une partie moletée 10, constituée d'une pluralité de rainures 11 longitudinales, réalisées sur le filetage de la tige 2, de manière à former une pluralité de rainures hélicoïdales. Les rainures 11 sont toutes parallèles à l'axe A-A de la tige filetée 2. La partie moletée 10 est située en regard de la zone d'assemblage 9 de la douille 3 et peut se prolonger sous une partie de la zone de chambrage 8 de la douille 3.

Les rainures hélicoïdales, constituées par l'entrecroisement caractéristique du filetage de la tige 2 et des rainures longitudinales 11, ont pour rôle d'optimiser l'assemblage de la douille 3 sur la tige filetée 2. Les rainures longitudinales 11 garantissent un effet d'anti-rotation de la douille 3 sur la tige filetée 2 et les rainures hélicoïdales garantissent un effet d'anti-extraction de la douille 3. La partie moletée 10 garantit donc une bonne tenue mécanique du goujon 1 en utilisation.

La tige filetée 2 comporte également une gorge 12, réalisée entre la tête 4 et la partie moletée 10 de la tige filetée 2. La gorge 12 a pour fonction d'améliorer l'assemblage de la douille 3 sur la tige filetée 2 et de garantir un effet d'anti-extraction de la tige filetée 2.

Le procédé de fabrication du goujon à sertir 1 consiste à fabriquer séparément la tige filetée 2 et la douille 3, à leur appliquer un traitement de surface, notamment un traitement anti-corrosion, et à les assembler ensuite par déformation. À titre d'exemple, l'assemblage de la douille 3 sur la tige filetée 2 peut être effectué par un procédé de rétreint, par exemple, par sertissage, par matriçage ou par martelage. Le goujon à sertir 1 ainsi obtenu est un produit prêt à l'emploi, qui présente une bonne tenue à la corrosion, car ses deux composants constitutifs, à savoir la tige filetée 2 et la douille 3, ont été traités séparément.

Le procédé d'assemblage de la douille 3 sur la tige filetée 2 est réalisé, de préférence, par une technique de matriçage. La douille 3 est sertie par deux matrices sur la tige filetée 2 en une ou plusieurs opérations, selon des angles différents, afin de réduire le diamètre extérieur de la douille 3. Lors du matriçage de la douille 3 sur la tige filetée 2, la matière constituant la douille 3 pénètre, d'une part, dans la partie moletée 10 de la tige filetée 2 et, d'autre part, remplit la gorge 12 sous la tête 4 de la tige filetée 2 (figure 2). Cette opération d'écrouissage a pour but de durcir la zone d'assemblage 9. La matière écrouie et la conception particulière de la tige filetée 2 et de la partie moletée 10 suffisent à obtenir un assemblage mécanique très résistant en rotation et en extraction des deux composants constitutifs du goujon 1.

Le procédé d'assemblage des composants du goujon à sertir 1 est réalisé avant le sertissage du goujon 1 sur le support 14, afin d'assurer une tenue mécanique optimale au goujon 1.

Sur la figure 4, le goujon 1 est serti sur le support 14. La zone de chambrage 8 s'est transformée en un bourrelet 15 de sertissage, qui a pour fonction de maintenir le goujon 1 sur le support 14. Le support 14 est donc maintenu entre le bourrelet 15 et la collerette d'appui 5.

Comme représenté aux figures 3 et 4, la partie moletée 10 de la tige fileté 2 présente, de préférence, une hauteur H correspondant approximativement à la distance séparant la gorge 12 de la tige filetée 2 du support 14, après sertissage du goujon 1. Néanmoins, la hauteur H ne doit en aucun cas s'étendre au-dessous de la collerette 5 après sertissage, c'est-à-dire sur la partie fonctionnelle du goujon 1.

Le goujon à sertir 1 présente ainsi les avantages suivants. À l'issue de l'assemblage de la douille 3 sur la tige filetée 2, avant sertissage sur le support 14, le goujon 1 est un produit fini, prêt à emballer, car le traitement anti-corrosion a été effectué au préalable. De plus, le rétreint effectué pour l'assemblage de la douille 3 sur la tige 2 facilite l'introduction du goujon 1 dans les logements prédéterminés des applications propres à chaque client, notamment dans le cas de la pose en automatique du goujon 1.

L'assemblage par matriçage entraîne une tenue mécanique supérieure à un assemblage par soudure ou par tout autre principe de sertissage localisé, avec une dispersion et une variabilité minimes. La pose du goujon 1 sur le support 14 est de meilleure qualité, car la zone d'assemblage 9 résiste mieux aux efforts de pose. L'assemblage des composants du goujon 1 étant réalisé avant sertissage sur le support 14, le goujon 1 ne risque pas d'être endommagé par le sertissage sur le support 14. Enfin, la tenue mécanique du goujon 1 est optimisée, grâce à la gorge 12 et à la partie moletée 10, réalisée sur le filetage de la tige 2 en regard de la zone d'assemblage 9.

Le goujon à sertir 1 est particulièrement adapté pour l'industrie automobile, qui souhaite utiliser des goujons à sertir présentant les avantages décrits ci-dessus, à savoir une bonne tenue à la corrosion et une bonne tenue mécanique aux sollicitations.

## Revendications

1. Procédé d'assemblage des composants d'un goujon (1) à sertir dans un support (14), le goujon à sertir (1) comportant une tige cylindrique filetée (2), terminée par une tête (4), et une douille (3), liée à la tige filetée (2) par déformation et comportant successivement une zone d'assemblage (9) de la douille (3) sur la tige filetée (2), en contact avec la tête (4), une zone de chambrage (8), destinée à la formation d'un bourrelet (15) de sertissage du goujon (1), et une collerette d'appui (5), la tige filetée (2) comportant, en regard de la zone d'assemblage (9), une partie moletée (10) constituée par une pluralité de rainures (11) longitudinales, procédé d'assemblage **caractérisé en ce que** les rainures longitudinales (11) sont réalisées sur le filetage de la tige (2), de manière à former une pluralité de rainures hélicoïdales, et **en ce que** l'assemblage de la douille (3) sur la tige filetée (2) est effectué par une méthode de rétreint, avant sertissage dans ledit support (14).

2. Procédé d'assemblage selon la revendication 1, **caractérisé en ce qu'**il comporte un traitement anti-corrosion de la tige filetée (2) et de la douille (3), avant l'assemblage de la douille (3) sur la tige filetée (2).

3. Goujon à sertir (1) réalisé par un procédé d'assemblage selon l'une des revendications 1 et 2, **caractérisé en ce qu**'il comporte une gorge (12) réalisée entre la tête (4) et la partie moletée (10) de la tige filetée (2).

4. Goujon selon la revendication 3, **caractérisé en ce que** le diamètre de la tête (4) de la tige filetée (2) est sensiblement identique au diamètre externe de la zone d'assemblage (9) de la douille (3), après assemblage de la douille (3) sur la tige filetée (2).

5. Goujon selon l'une des revendications 3 et 4, **caractérisé en ce que** la tête (4) de la tige filetée (2) comporte un chanfrein (13) de forme sensiblement tronconique.

6. Goujon selon l'une quelconque des revendications 3 à 5, **caractérisé en ce que** la tige filetée (2) et la douille (3) sont réalisées en un matériau choisi parmi l'acier, l'acier inoxydable, l'aluminium ou le laiton.

## Claims

1. Method for assembling components of a clinching stud (1) in a support (14), the clinching stud (1) comprising a threaded cylindrical rod (2) terminated by a head (4), and a dowel bush (3), joined to the threaded rod (2) by deformation and successively comprising an assembly zone (9) of the dowel bush (3) on the threaded rod (2), in contact with the head (4), a recess zone (8) designed for formation of a clinching rim (15) of the clinching stud (1), and a flange collar (5), the threaded rod (2) comprising a knurled part (10) formed by a plurality of longitudinal grooves (11), facing the assembly zone (9), method for assembling **characterized in that** the longitudinal grooves (11) are made on the thread of the rod (2) so as to form a plurality of helical grooves, and that assembly of the dowel bush (3) on the threaded rod (2) is performed by a swaging method before clinching is performed in said support (14).

2. Method for assembling according to claim 1, **characterized in that** it comprises anti-corrosion treatment of the threaded rod (2) and dowel bush (3) before assembly of the dowel bush (3) on the threaded rod (2) is performed.

3. Clinching stud (1) achieved by a method for assembling according to one of the claims 1 and 2, **characterized in that** it comprises a groove (12) made between the head (4) and the knurled part (10) of the threaded rod (2).

4. Clinching stud according to claim 3, **characterized in that** the diameter of the head (4) of the threaded rod (2) is substantially identical to the external diameter of the assembly zone (9) of the dowel bush (3) after assembly of the dowel bush (3) on the threaded rod (2) has been performed.

5. Clinching stud according to one of the claims 3 and 4, **characterized in that** the head (4) of the threaded rod (2) comprises a substantially tapered chamfer (13).

6. Clinching stud according to any one of the claims 3 to 5, **characterized in that** the threaded rod (2) and the dowel bush (3) are made from a material chosen from steel, stainless steel, aluminium or brass.

## Patentansprüche

1. Verfahren zum Verbinden der Bestandteile einer Nietschraube (1), die in einen Träger (14) gekrimpt werden soll, wobei die Nietschraube (1) einen gewindeten zylindrischen Schaft (2), an dessen Ende ein Kopf (4) sitzt, und eine Hülse (3) umfasst, die mit dem gewindeten Schaft (2) durch Verformung verbunden wurde, und die nacheinander einen mit dem Kopf (4) in Kontakt stehenden Verbindungsbereich (9), zum verbinden der Hülse (3) auf dem gewindeten Schaft (2), eine Stauchzone (8), die zur Herstellung eines Krimpwulstes (15) der Nietschraube (1) bestimmt ist, und einen Auflagekragen (5) umfasst, wobei der gewindete Schaft (2) gegenüber dem Verbindungsbereich (9) einen gerändelten Bereich (10) aufweist, der von einer Mehrzahl Längsrillen (11) gebildet wird, Verbindungsverfahren, das **dadurch gekennzeichnet ist, dass** die Längsrillen (11) auf dem Gewinde des Schafts (2) angebracht werden, um eine Mehrzahl spiralförmiger Rillen zu bilden, sowie **dadurch**, dass die Befestigung der Hülse (3) auf dem gewindeten Schaft (2) durch ein Querschnittsverminderungsverfahren vor dem Krimpen in den genannten Träger (14) erfolgt.

2. Verbindungsverfahren nach Anspruch 1, **dadurch gekennzeichnet, dass** es eine Rostschutzbehandlung des gewindeten Schafts (2) und der Hülse (3) vor dem Verbinden der Hülse (3) mit dem gewindeten Schaft (2) umfasst.

3. Nietschraube (1), die mittels eines Verbindungsverfahrens nach einem der Ansprüche 1 und 2 hergestellt wurde, **dadurch gekennzeichnet, dass** sie eine Nut (12) umfasst, die zwischen dem Kopf (4) und dem gerändelten Bereich (10) des gewindeten Schafts (2) angebracht ist.

4. Nietschraube nach Anspruch 3, **dadurch gekennzeichnet, dass** der Durchmesser des Kopfes (4) des gewindeten Schafts (2) im Wesentlichen identisch ist mit dem des Verbindungsbereichs (9) der Hülse (3) nach dem Krimpen der Hülse (3) auf dem gewindeten Schaft (2).

5. Nietschraube nach einem der Ansprüche 3 und 4, **dadurch gekennzeichnet, dass** der Kopf (4) des gewindeten Schafts (2) eine im Wesentlichen kegelstumpfförmige Abschrägung (13) umfasst.

6. Nietschraube nach einem der Ansprüche 3 bis 5, **dadurch gekennzeichnet, dass** der gewindete Schaft (2) und die Hülse (3) aus einem Material gefertigt sind, das aus Stahl, Inoxstahl, Aluminium oder Messing ausgewählt ist.
